Europäisches Patentamt

European Patent Office

Office européen des brevets

(11) Publication number: **0 258 010**
**A2**

(12) **EUROPEAN PATENT APPLICATION**

(21) Application number: **87307413.2**

(22) Date of filing: **21.08.87**

(51) Int. Cl.⁴: **F 16 D 65/56**

(30) Priority: **23.08.86 GB 8620539**

(43) Date of publication of application:
**02.03.88 Bulletin 88/09**

(84) Designated Contracting States: **DE FR GB IT**

(71) Applicant: **AUTOMOTIVE PRODUCTS PUBLIC LIMITED COMPANY**
**Tachbrook Road**
**Leamington Spa Warwickshire CV31 3ER (GB)**

(72) Inventor: **Haines, William Ernest**
**39 St. Mary's Close**
**Southam Warwicks CV33 0EW (GB)**

(74) Representative: **Cundy, Anthony Brian et al**
**Anthony Cundy & Company 384 Station Road Dorridge**
**Solihull West Midlands B93 8ES (GB)**

(54) **Automatic adjuster for drum brake.**

(57) An automatic adjuster for an internal shoe drum brake having a strut (19) extending between the shoes (11 and 12), includes an adjustment element (22) for adjusting the effective length of the strut (19) to maintain the appropriate clearance between the brake shoes (11 and 12) and the drum. The adjustment element (22) has a screw threaded portion (26) which co-operates with a correspondingly threaded ratchet wheel (29) and a pawl assembly (30,36) is associated with said ratchet wheel (29), the pawl assembly (30, 36) moving tangentially with respect to the ratchet wheel (29) as the brake shoes (11 and 12) move upon actuation of the brake, so that if movement of the brake shoes (11 and 12) is in excess of a predetermined amount, a pawl formation (38) will engage a tooth (57) of the ratchet wheel (29) to rotate the ratchet wheel (29) and adjust the adjustment element (22). A temperature sensitive element (60) is provided to deflect the pawl formation (38) so that it will not engage the ratchet wheel (29) as it moves relative thereto, when the temperature exceeds a predetermined value.

FIG. 2.

EP 0 258 010 A2

## Description

## AUTOMATIC ADJUSTER FOR DRUM BRAKE

The present invention relates to an automatic adjuster for a drum brake, suitable for motor vehicles.

A drum brake normally includes a fixed back plate, a pair of arcuate brake shoes mounted on the back plate, expanding means for urging the brake shoes apart generally radially of the back plate and a rotating brake drum, coaxial with the back plate, against which the brake shoes act.

Such a brake may have independent service brake and parking brake expanding means. By service brake, we mean the primary vehicle braking system, usually hydraulically actuable, and by parking brake, the secondary vehicle braking system, usually mechanically actuable.

Wear adjusters are normally incorporated in a drum brake to maintain a substantially fixed clearance between the brake shoes and the brake drum, to compensate for wear of the brake shoe linings. Such adjusters are desirable as they maintain the working travel of the expanding means within the range of a vehicle brake actuating system. Automatic operation of wear adjusters, as the brake is actuated, is known.

This invention is particularly concerned with wear adjusters for drum brakes having a strut between the hand brake lever pivotted on one shoe, and the other shoe.

It has been proposed in British Patent Application Number 8530817 to provide an automatic adjuster mechanism including a spacer element having a wedge shaped portion which is interposed between the strut and one of the shoes, so that the position of the wedge portion relative to the strut may be adjusted to compensate for wear of the friction linings. Adjustment of the wedge portion is effected by a pawl and ratchet mechanism acting upon a threaded portion of the spacer element. The threaded portion of the spacer element and the ratchet wheel mounted thereon are supported on a trunnion mounted through the web portion of one of the brake shoes. The pawl and ratchet mechanism is arranged such that upon hydraulic actuation of the brake, relative movement between the brake shoe and strut will cause the pawl to move relative to the ratchet wheel, so that it will engage a tooth of the ratchet wheel and rotate it to effect adjustment of the spacer element.

With this form of adjuster, expansion of the brake drum may lead to over-adjustment of the mechanism when the brake is hot. If this is permitted the running clearance between the brake shoes and the drum may be taken up, when the brake cools, so that the brake shoes will drag, which will result in excessive wear.

The present invention provides an automatic adjuster mechanism which will operate to adjust the clearance between the brake shoes and drum only when the brake is below a predetermined temperature.

According to one aspect of the present invention, an automatic adjuster for an internal shoe drum brake having a strut extending between the shoes, includes an adjustment element for adjusting the effective length of the strut to maintain the appropriate clearance between the brake shoes and the drum, said adjustment element having a screw threaded portion which co-operates with a correspondingly threaded ratchet wheel; a pawl assembly associated with said ratchet wheel, said pawl assembly moving tangentially of the ratchet wheel as the brake shoes move upon actuation of the brake, so that if movement of the brake shoes is in excess of a predetermined amount, a pawl formation will engage a tooth of the ratchet wheel and rotate the ratchet wheel to adjust the adjustment element; characterised in that a temperature sensitive element is provided to deflect the pawl formation so that it will not engage the ratchet wheel as it moves relative thereto, when the temperature exceeds a predetermined value.

An embodiment of the invention is now described, by way of example only, with reference to the accompanying drawings, in which;

Figure 1 is a view of a drum brake assembly to which the invention is applicable; and

Figure 2 is an exploded view of the automatic adjuster mechanism of the invention.

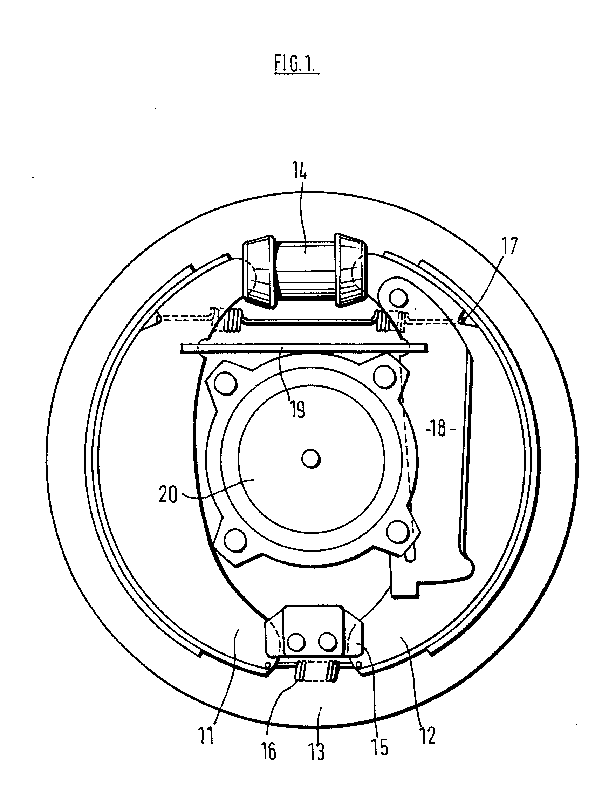

With reference to Figure 1, there is shown a drum brake assembly having a pair of brake shoes 11 and 12 mounted on a back plate 13. The brake shoes 11 and 12 may be urged apart by a service brake expander in the form of a double acting hydraulic cylinder 14, about a fixed abutment 15. Pull-off springs 16 and 17 are provided to return the brake shoes to their operative positions. A handbrake lever 18 is pivotted to the brake shoe 12 and acts on shoe 11 through a rigid cross strut 19, movement of the lever clockwise (as viewed in Figure 1) about its pivot urging the shoes 11 and 12 apart to apply the handbrake. A rotatable hub 20 carries a brake drum (not shown) which is coaxial with the backing plate 13.

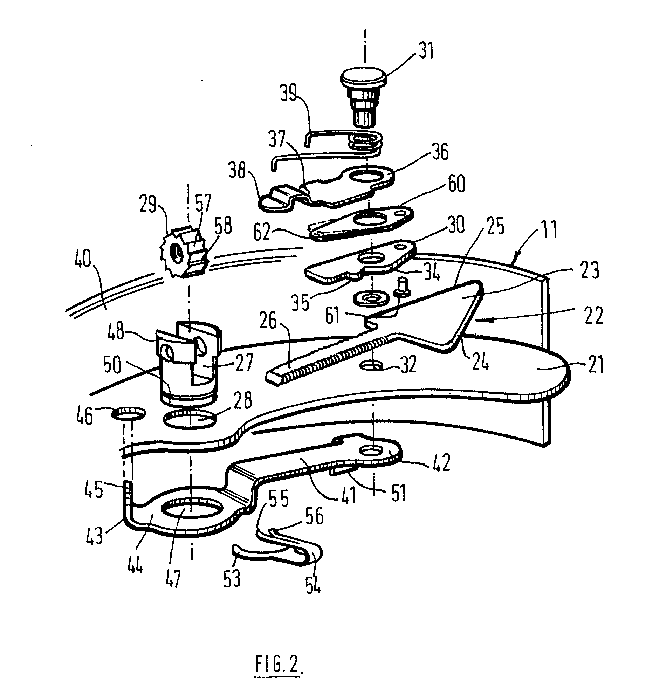

The automatic adjuster illustrated in Figure 2 is mounted on the web portion 21 of brake shoe 11. The adjuster comprises a spacer element 22 formed from a flat plate having a wedge portion 23 with divergent edges 24 and 25 and a screw threaded portion 26 which is generally rectangular in cross section with screw threaded formations along its narrower side edges. A trunnion 27 is mounted through an aperture 28 in the web portion 21 so that it is free to rotate relative to the brake shoe 11. A threaded ratchet wheel 29 is located on the trunnion 27 and engages the threaded portion 26 of spacer element 22.

A support plate 41 is secured at one end 42 to the web portion 21 of shoe 11 on the opposite side from the spacer element 22, by means of a shouldered rivet 31. The portion of support plate 41 at end 42 lies against the web portion 21, while at the other end 43, a portion 44 is cranked away from the web portion 21, so that it lies parallel to but is spaced away from web portion 21. The end 43 of support plate 41 is bent perpendicular to the portion 44 so that it abuts the web portion 21. A tab portion 45 is provided at the end 43 and locates in a hole 46 in the web portion 21, to position the support plate so that portion 44 underlies the aperture 28 in the web portion 21. A corresponding aperture 47 is provided in portion 44 of the support plate 41 through which the trunnion 27 extends, so that a shoulder 48 on the trunnion 27 abuts the upper edge of the web portion 21. A tab 51 is also provided at the end 42 of support plate 41 and abuts the table 40 of shoe 11 to further locate the support plate 41. A further tab (not shown) may also be provided adjacent end 42 of support plate 41 to provide an anchorage for pull-off spring 17.

A retaining clip 52 has a circlip portion 53 which engages in a circumferential groove 50 in the trunnion 27 and abuts the under side of portion 44 of support plate 41, to retain the trunnion 27 in position. The retaining clip 52 also has a tab formation 54 which is bent around the edge of plate 41 and between the posts of trunnion 27. The tab formation 54 is divided into two resilient fingers 55 and 56, which extend into engagement with ratchet wheel 29. Finger 55 is longer than finger 56 by half the pitch of the teeth 57 of the ratchet wheel 29, so that at one position of the ratchet wheel 29, finger 56 will engage the radial face 58 of one tooth 57 and upon rotation of the ratchet wheel 29 by half a tooth pitch, finger 55 will engage the radial face 58 of the same tooth 57. A further turn of half a tooth pitch will then bring finger 56 into abutment with the radial face 58 of the next tooth 57, and so on.

A plate 30 is pivotally attached to the web portion 21 of shoe 11 by the shouldered rivet 31. The portion of plate 30 surrounding the rivet 31 defines an abutment 34 against which the edge 25 of the wedge portion 23 may bear. A formation 35 is also provided on plate 30 at a position spaced from the rivet 31, this formation 35 being arranged to engage edge 25 of the wedge portion 23.

An actuating arm 36 is also pivotted on rivet 31, so that it overlies plate 30. This actuating arm 36 has a flange formation 37 which engages plate 30 on the side thereof remote from formation 35, and the pawl formation 38 which overlies and engages the ratchet wheel 29. The actuating arm 36 is resiliently urged by a torsion spring 39 mounted on the upper end of rivet 31 and acting between the actuating arm 36 and the inside of brake shoe table 40, to force the flange portion 37 of the actuating arm 36 into engagement with plate 30 and the formation 35 on plate 30 into engagement with the edge 25 of wedge portion 23. The torsion spring 39 also acts between the head of the rivet 31 and the actuating arm 36, to resiliently load the actuating arm 36 down onto plate 30 and pawl formation 38 down into engagement with the ratchet wheel 29.

A bimetallic strip element 60 is mounted on rivet 31, between plate 30 and actuating arm 36 and is located relative to plate 30 by means of rivet 61. The free end 62 of element 60 is arranged to distort away from plate 30, as illustrated in broken line in Figure 2.

When mounted via the trunnion 27 on the web portion 21 of brake shoe 11, the spacer element 22 lies against the web portion 21. The rigid strut 19 of the handbrake mechanism engages edge 24 of wedge portion 23. When the brake is in the non-operative condition the rigid strut 19, acting through the wedge portion 23 of spacer element 22, the abutment 34 on plate 30 which is engaged by edge 25 of wedge portion 23, and rivet 31, opposes the load drawing the brake shoes 11 and 12 together, that is applied by pull-off spring 17.

For handbrake operation, the load applied to the rigid strut 19 by movement of lever 20 in the clockwise direction is transmitted to brake shoe 11 via spacer element 22, abutment 34 on plate 30 and rivet 31, so that brake shoes 11 and 12 will be forced apart and the friction linings thereon will be forced into engagement with the brake drum.

When the handbrake is released and the service brake is applied by means of the hydraulic cylinder 14, relative movement will occur between the end of rigid strut 19 and brake shoe 11. During this relative movement, the load applied by torsion spring 39, via actuating arm 36, the flange formation 37, plate 30 and formation 35 on edge 25 of wedge portion 23, will cause the spacer element 22 to rotate about the pivotted trunnion 27, thereby maintaining edge 24 of wedge shaped portion 23 in engagement with the end of rigid strut 19. Movement of the spacer element 22 in this manner will produce a clearance between edge 25 on the wedge shaped portion 23 and the abutment 34.

Under normal operating conditions pivotting of the spacer arm 22 will also allow the actuating lever 36 and plate 30 to pivot and pawl formation 38 will move relative to ratchet wheel 29. If movement of the pawl formation 38 is sufficient to bring it into engagement with a radial face 58 of one of the teeth 57 of the ratchet wheel 29, it will rotate ratchet wheel 29 and interaction of the screw thread thereof with the screw threaded portion 26 of spacer element 22 will cause the spacer element 22 to advance between the end of strut 19 and abutment 34, so that the effective width of the wedge portion 32 positioned therebetween will be increased. Rotation of the ratchet wheel 29 in the direction to effect adjustment of the spacer element 22, is permitted by the resilient fingers 55 and 56, which ride up the inclined faces of the ratchet teeth 57.

Upon release of the service brake, the spacer element 22 will pivot back against the action of spring 39 until edge 25 again engages abutment 34. The effective length of the rigid strut 19 between the brake shoe 11 and the handbrake lever 20 is thereby effectively increased, thus increasing the distance between the brake shoes 11 and 12 and compensating for any increase in the gap between the friction linings of the brake shoes 11 and 12 and the brake drum, due to wear of the friction linings.

Release of the service break will also cause the actuating arm 36 to rotate against spring 39 and the pawl formation 38 will ride up the inclined surface of the next tooth of the ratchet wheel 29. Abutment of finger 55 or 56 against the radial face 58 of one of the teeth 57 of ratchet wheel 29 will permit this to happen without rotation of the ratchet wheel 29, thus avoiding retraction of the spacer element 22. If the clearance between the friction linings and the brake drum is sufficient, return movement of pawl formation 38 will be sufficient to pick up the next tooth of the ratchet wheel 29. The length of the actuating arm 36, pitch of the teeth of the ratchet wheel 29, pitch of the threads of the ratchet wheel 29 and portion 26 of spacer element 22 and the divergence of edges 24 and 25 of spacer element 22 are selected, such that the incremental adjustment produced by movement of the ratchet wheel 29 by one tooth, will maintain the gap between the friction linings and the brake drum within desired tolerances, which lie between the minimum running clearance required and the maximum travel permitted by a handbrake mechanism.

As the temperature of the brake increases the end 62 of element 60 will distort away from plate 30 and will lift the actuating arm 36, against the load applied by spring 39, until at a predetermined temperature, the pawl formation 38 will be lifted clear of the ratchet wheel 29. The pawl formation 38 will then be able to move relative to ratchet wheel 29 without adjusting the clearance between the brake shoes and brake drum.

Various modifications may be made without departing from the invention. For example, instead of rivet 31, a shouldered pivot post may be secured to the web portion 21 and support plate 41 by a releasable fastening, for example a circlip. Furthermore, the plate 30 and actuating arm 36 may be made as an integral component, the pawl formation being defined by a resilient portion. The torsion spring 39 may also be replaced by other forms of spring and in fact the pull-off spring 17 may be used for this purpose in addition to urging the brake shoes 11 and 12 together. While it is advantageous to use a flat spacer element 22 so that loads will be transmitted directly into the web of the shoe, the screw threaded portion 26 may be offset from the wedge portion 23. While a bimetallic strip element is used in the above embodiment to lift the pawl formation clear of the ratchet wheel, any temperature sensitive element may be used for this purpose.

**Claims**

1. An automatic adjuster for an internal shoe drum brake having a strut (19) extending between the shoes (11 and 12), said adjuster including an adjustment element (22) for adjusting the effective length of the strut (19) to maintain the appropriate clearance between the brake shoes (11 and 12) and the drum, said adjustment element (22) having a screw threaded portion (26) which co-operates with a correspondingly threaded ratchet wheel (29); a pawl assembly (30, 36) associated with said ratchet wheel (29), said pawl assembly (30, 36) moving tangentially of the ratchet wheel (29) as the brake shoes (11 and 12) move upon actuation of the brake, so that if movement of the brake shoes (11 and 12) is in excess of a predetermined amount, a pawl formation (38) will engage a tooth (57) of the ratchet wheel (29) and rotate the ratchet wheel (29) to adjust the adjustment element (22); characterised in that a temperature sensitive element (60) is provided to deflect the pawl formation (38) so that it will not engage the ratchet wheel (29) as it moves relative thereto, when the temperature exceeds a predetermined value.

2. An automatic adjuster according to claim 1 characterised in that said pawl assembly (30, 36) includes an actuating arm (36) which defines the pawl formation (38) and moves in a plane tangential to the ratchet wheel (29), the temperature sensitive element (60) applying a load to the actuating arm (36) which increases as the temperature increases and urges the actuating arm (36) out of the tangential plane.

3. An automatic adjuster according to Claim 1 or 2 characterised in that the pawl assembly (30, 36) comprises a plate (30) pivotally attached to the brake shoe (11) for engagement of the adjustment element (22) and an actuating arm (36) defining said pawl formation (38) mounted for movement with said plate (30), spring means (39) is provided to load the actuating arm (36) down towards the plate (30) and the pawl formation (38) into engagement with the ratchet wheel (29) and the temperature sensitive element (60) acts against the spring means (39) to lift the actuating arm (36) away from the plate (30) and the pawl formation (38) away from the ratchet wheel (29).

4. An automatic adjuster according to Claim 3 characterised in that the temperature sensitive element (60) is interposed between the plate (30) and the actuating arm (36).

5. An automatic adjuster according to Claim 4 characterised in that the temperature sensitive element (60) is a bimetallic strip element which is interposed between the plate (30) and actuating arm (36) and distorts to force the actuating arm (36) away from the plate (30) as the temperature increases.

6. An automatic adjuster according to Claim 5 characterised in that a bimetallic strip element (60) is secured at one end to the plate (30) and is free to distort away from the plate (30) at the other end.

7. An internal shoe drum brake assembly including a strut (19) extending between the shoes (11 and 12) and an automatic adjuster formed in accordance with any one of claims 1 to 6, for adjusting the effective length of the strut (19) to maintain the appropriate clearance between the brake shoes (11 and 12) and the brake drum.

0258010

FIG.1.

0258010

FIG.2.